# EUROPÄISCHE PATENTSCHRIFT

(11) **EP 3 355 998 B1**
(45) Veröffentlichungstag und Bekanntmachung des Hinweises auf die Patenterteilung: **27.04.2022**
(21) Anmeldenummer: 16774950.6
(22) Anmeldetag: 30.09.2016
(51) Int. Cl.: A63B 21/02, A63B 21/055, F16B 2/06, F16B 2/12, F16B 2/18, F16B 7/14, F16B 7/04, A63B 5/11

(54) **TRAMPOLIN**
TRAMPOLIN
TRAMPOLIN

(30) Priorität: 04.10.2015 DE 102015116819; 04.10.2015 DE 102015116820; 22.02.2016 DE 102016103072
(43) Veröffentlichungstag der Anmeldung: 08.08.2018
(73) Patentinhaber: Bellicon AG, 6005 Luzern (CH)
(72) Erfinder: FISCHER, Stefanie, 70499 Stuttgart (DE); BIRZELE, Martin, 73635 Rudersberg (DE)
(74) Vertreter: Rätsch, Caroline
(86) Internationale Anmeldenummer: PCT/EP2016/073434
(87) Internationale Veröffentlichungsnummer: WO 2017/032907

(56) Entgegenhaltungen:
- CN-U- 204 543 368
- DE-U1-202014 007 636
- US-A- 2 854 293
- US-A- 3 195 938
- US-A1- 2007 012 902
- US-A1- 2008 009 394
- US-B1- 6 261 207
- US-B2- 8 657 129

## Beschreibung

Die Erfindung betrifft ein Trampolin mit den Merkmalen des Patentanspruchs 1. Die Erfindung ist insbesondere gerichtet auf so genannte Mini-Trampoline, die auch Fitness-Trampoline genannt werden. Hierbei handelt es sich um kleinere Trampoline mit einem maximalen Durchmesser von 2 bis 3 Metern, die in der Physiotherapie und im Fitnessbereich Einsatz finden.

Bei den so genannten Mini- oder Fitness-Trampolinen unterscheidet man zwischen Trampolinen mit einer Federaufhängung und einer Gummiseilaufhängung. Bei der Federaufhängung ist das Sprungtuch über Spiralfedern an dem Rahmen befestigt. Hierzu weist das Sprungtuch als Aufnahmeeinrichtung beispielsweise einen Bügel bzw. eine Öse auf, die mittels einer Schlaufe an dem Sprungtuch befestigt ist und in die jeweils eine Spiralfeder eingreift. Auf ihrer anderen Seite wird die Spiralfeder in den Rahmen eingehängt. Ein Trampolin mit einer Federaufhängung stellt erhebliche Beschleunigungskräfte zur Verfügung.

Bei der Gummiseilaufhängung kommen ein oder mehrere elastische Seilringe oder (offene) Seile zum Einsatz, die das Sprungtuch mit dem Rahmen verbinden. Hier kann die Aufnahmeeinrichtung als Hakenelement ausgebildet sein, in das jeweils eine Aufhängung eingehängt ist. Alternativ kommt auch eine Schlaufe in Betracht, durch die hindurch ein Seil gezogen ist, das das Sprungtuch mit dem Rahmen verbindet. Die größere Elastizität einer derartigen Gummiseilaufhängung sorgt für ein "weicheres" Abbremsen des Körpers und schont insoweit nicht nur die Gelenke, sondern verlängert auch die muskulären Belastungs- und Entlastungsphasen beim Springen, was vorteilhafte Trainingseffekte mit sich bringt.

Die Erfindung ist sowohl auf Trampoline mit Federaufhängungen als auch auf Trampoline gerichtet, bei denen die Aufhängung als elastisches Seil oder elastischer Seilring ausgebildet ist. Grundsätzlich kann die Erfindung bei jeglicher Art von Trampolinen Einsatz finden, unabhängig von der Art der Aufhängung des Sprungtuchs und der Geometrie des Rahmens.

Den bekannten Trampolinen ist gemein, dass sie über einen Rahmen verfügen, von dem Beine abgehen. Die Beine sorgen dafür, dass sich der Rahmen in einem bestimmten Abstand zum Boden befindet, wenn das Trampolin aufgestellt ist. Hierdurch wird gewährleistet, dass sich das Sprungtuch beim Springen in Richtung auf den Boden bewegen kann.

Aus der Praxis sind sowohl runde als auch polygonale Rahmenformen bekannt. Der Rahmen besteht aus einem Rohr, das zur Herstellung des Rahmens gebogen wird.

In jüngerer Zeit ist ein Fitnesstrend zu beobachten, bei dem spezielle Bewegungsprogramme auf das Trampolin abgestimmt werden. Für einen sicheren Halt auf dem Trampolin kommt die Haltestange zum Einsatz, wobei die Haltestange in aller Regel an ihrem freien Ende seitlich von der Haltestange abgehende Griffe aufweist, an denen sich der Benutzer während der Übungen festhalten kann.

Aus der DE 20 2014 007 636 U1 ist ein Trampolin bekannt, bei dem die Haltestange über ein Zwischenstück an einem Bein des Trampolins befestigt ist. Zusätzlich ist die Haltestange durch zwei seitliche Streben gesichert, die das untere Ende der Haltestange mit den benachbarten Beinen des Trampolins verbinden. Die bekannte Konstruktion ist stabil. Sie bedingt jedoch einen hohen Materialaufwand. Außerdem ist der Zusammenbau aufwendig.

Aus der US 2007/0012902 A1 ist ein Trampolin mit einer Haltestange bekannt, die zum Halten eines Sicherheitsnetzes dient. Die Haltestange ist durch eine Führung höhenverstellbar an jeweils einem Bein des Trampolins gehalten, wobei die Führung sowohl das jeweilige Bein als auch die Haltestange umklammert und fixiert.

Aus der US 8,657,129 B2 ist ein Rack mit einem Gestell bekannt, an dem Musikinstrumente wie zum Beispiel ein Becken mit einer Stange befestigt werden kann. Die Stange ist in einer Führung aufgenommen, die an dem Gestell befestigt ist.

Aus der Praxis ist ein Trampolin bekannt, an dessen Rahmen eine Klemmvorrichtung angeschweißt ist. Die Haltestange ist in der Klemmvorrichtung längsverschieblich aufgenommen und arretierbar. Das bekannte Trampolin ist einfach aufgebaut und zusammensetzbar. In der Praxis wurde allerdings gefunden, dass die Lebensdauer zu wünschen übrig lässt.

Der Erfindung liegt die **Aufgabe** zugrunde, ein Trampolin mit Stange zu schaffen, dessen Aufbau einerseits kompakt ist und das andererseits auch höheren Belastungen standhält.

Diese Aufgabe wird erfindungsgemäß **gelöst** durch ein Trampolin mit den Merkmalen des Patentanspruchs 1.

Die Erfindung gestattet eine Fixierung der Stange in der Führung, die auch höheren Belastungen während einer intensiven Benutzung des Trampolins standhält. Dabei stellt das Innenstück die Klemmkraft zur Verfügung. Vorzugsweise wird die Stange zwischen der Führung und dem Innenstück verklemmt.

Der Führung kommen im Rahmen der Erfindung zwei Aufgaben zu. Erstens nimmt sie die Stange auf und fixiert sie. Zweitens bildet sie vorteilhaft eine Aufnahme für das Innenstück.

Im Rahmen der Erfindung kann eine Stange zum Einsatz kommen, die ein freies Ende aufweist. Das freie Ende trägt beispielsweise eine Griffeinrichtung oder eine Halterung für Geräte. Dann wird man für die Stange lediglich eine Führung vorsehen. Alternativ kann eine Stange zum Einsatz kommen, die U-förmig gebogen ist. Sie weist zwei freie Enden auf, von denen jeweils ein Ende in eine Führung gesteckt werden kann. Dann wird man vorzugsweise zwei Führungen für die Stange vorsehen. In der folgenden Beschreibung wird aus Übersichtsgründen ein Gestell mit lediglich einer Führung beschrieben.

Vorteilhafterweise weist die Führung mindestens eine erste Öffnung auf, durch die hindurch die Stange gesteckt ist. Die Öffnung ist zweckmäßig an die Außenkontur der Stange angepasst, jedoch größer ausgebildet als die Außenkontur des Stange, damit die Stange problemlos in die Führung eingesteckt und in ihrer Höhe verstellt werden kann. Bevorzugt sind zwei Öffnungen in der Führung vorgesehen. Dies führt zu einer stabileren Führung der Stange. Die beiden Öffnungen sind (bei aufgestelltem Trampolin) oben und unten in der Führung ausgebildet. Sie fluchten zweckmäßig.

In Weiterbildung der Erfindung wird vorgeschlagen, dass die Führung als Rohrstück ausgebildet ist. Vorzugsweise weist die Führung eine umlaufende Umfangswandung auf. Das Rohrstück ist eine besonders stabile und gleichzeitig einfach herzustellende Ausführungsform der Führung. Der Querschnitt des Rohrstücks kann rund oder eckig, insbesondere kreisrund oder quadratisch ausgebildet sein. Auch kommen ovale oder rechteckige Querschnittsflächen in Betracht. Im Rahmen der Erfindung wird der kreisrunde Querschnitt als besonders vorteilhaft angesehen, und zwar zum einen aus herstellungstechnischen Gründen und zum anderen aus sicherheitstechnischen Gründen, da die runde Form bei der vorliegenden Anwendung ein geringeres Verletzungsrisiko birgt.

Die erste Öffnung ist vorzugsweise in der Umfangswandung ausgebildet. Sofern das Rohrstück senkrecht zu der axialen Erstreckung der Beine, also bei einem stehenden Trampolin horizontal angeordnet ist, ist die Öffnung oben angeordnet, wobei es wie gesagt vorteilhaft ist, wenn eine weitere Öffnung auf der Unterseite des Rohrstücks ausgebildet ist. Die Stange geht dann durch die obere und die untere Öffnung der Führung/des Rohrstücks. Die obere und die untere Öffnung fluchten vorzugsweise.

Es wurde bereits vorstehend ausgeführt, dass das Innenstück in der Führung beweglich angeordnet ist. Vorzugsweise ist die Außenkontur des Innenstücks an die Innenkontur der Führung angepasst. Bei einem Rohrstück mit einer zylindrischen Innenfläche ist es also vorteilhaft, wenn das Innenstück eine zylindrische Außenfläche aufweist. Die Außenfläche hat einen geringfügig kleineren Durchmesser als der Innendurchmesser der Führung, damit das Innenstück in der Führung gut beweglich ist, was eine Fixierung der Stange in der Führung vereinfacht.

Als vorteilhaft wird es angesehen, wenn das Innenstück eine Öffnung aufweist, durch die die Stange hindurchgeht. Die Öffnung kann gebohrt sein. Sie geht im Falle eines Zylinderstücks quer durch das Zylinderstück.

Vorzugsweise kann das Innenstück in der Führung so ausgerichtet werden, dass die Öffnungen der Führung und die Öffnung des Innenstücks fluchten. Die Öffnungen des Innenstücks und der Führung müssen nicht zwangsweise gleich groß sein. Allerdings sind sie mindestens so groß wie der Außendurchmesser der Stange.

In diesem Zusammenhang sei angemerkt, dass vorstehend von der Ausführungsform eines zylindrischen Innenstücks gesprochen worden ist. Die Öffnung für die Stange durchbricht die Zylinderform. Gleichwohl handelt es sich im Sinne der Erfindung um eine Zylinderform (mit einer Öffnung).

Neben einer hohen Anforderung an die Stabilität des Trampolins wird auch gefordert, dass aus Benutzersicht der Zusammenbau, die Befestigung der Stange an dem Trampolin und ggf. die Wartung einfach möglich ist. In diesem Zusammenhang wird vorgeschlagen, dass die Führung eine dritte Öffnung aufweist, durch die hindurch das Innenstück in die Führung einsteckbar ist. Bei einem Rohrstück wird man die Einstecköffnung an der Stirnseite vorsehen. Ein bevorzugtes Ausführungsbeispiel ist dadurch gekennzeichnet, dass die Einsteckrichtung senkrecht zu den beiden Öffnungen in der Umfangsfläche der Führung verläuft. Als bevorzugt wird es ebenfalls angesehen, wenn die Einstecköffnung radial innen angeordnet ist. Das Innenstück wird vorteilhaft von innen nach außen in die Führung eingesteckt.

Vorzugsweise entspricht der Durchmesser der Öffnung dem Innendurchmesser der Führung. Das Innenstück kann also einfach in die Führung eingeschoben werden. Dort ist das Innenstück vorteilhaft verschieblich aufgenommen.

Zum Bewegen des Innenstücks ist vorteilhaft eine Betätigungseinrichtung vorgesehen. Vorzugsweise wird das Innenstück von einer Betätigungseinrichtung betätigt. Die Erfindung schafft damit eine Klemmeinrichtung für die Stange, die lediglich aus drei Grundkomponenten besteht und gegenüber herkömmlichen Lösungen eine deutlich bessere und stabilere Klemmung zur Verfügung stellt. Die Klemmeinrichtung wird gebildet aus Führung, Innenstück und Betätigungseinrichtung.

Eine besonders vorteilhafte Ausführungsform der Erfindung ist dadurch gekennzeichnet, dass sich die Betätigungseinrichtung an dem Rahmen oder vorzugsweise an der Führung abstützt. Eine derartige Konstruktion schafft eine kompakte Gesamtkonstruktion, die gleichzeitig in der Lage ist, große Klemmkräfte auf die Stange aufzubringen. Vorzugsweise weist die Führung eine Stirnwand auf, an der sich die Betätigungseinrichtung abstützt.

Zur Aufbringung der Klemmkräfte wird vorgeschlagen, dass die Betätigungseinrichtung und das Innenstück in Gewindeeingriff stehen. Durch ein Drehen der Betätigungseinrichtung wird das Innenstück in der Führung bewegt. Dabei wird die Stange vorteilhaft zwischen der Führung und dem Innenstück fixiert, wie es grundsätzlich als vorteilhaft angesehen wird.

Beim Drehen der Betätigungseinrichtung sind generell zwei Bewegungsmodelle denkbar. Entweder das Innenstück bewegt sich von der Betätigungseinrichtung weg, wenn die Betätigungseinrichtung gedreht wird, oder sie bewegt sich zur Betätigungseinrichtung hin.

Der Gewindeeingriff kann dadurch realisiert werden, dass die Betätigungseinrichtung einen Gewindezapfen aufweist, der in ein Gewinde des Innenstücks eingreift. Bei der Betätigungseinrichtung handelt es sich beispielsweise um eine Handschraube, die einen Handgriff beispielsweise aus Kunststoff und den besagten Gewindezapfen aufweist. Das Gewinde ist vorzugsweise stirnseitig in dem Innenstück ausgebildet.

Alternativ weist das Innenstück einen Gewindezapfen auf, der in ein Gewinde der Betätigungseinrichtung eingreift. Die Betätigungseinrichtung kann auch hier einen Handgriff (beispielsweise auf Kunststoff) aufweisen, wobei in dem Handgriff eine Mutter aufgenommen ist.

Bei den beiden vorstehend beschriebenen Ausführungsformen weist die Betätigungseinrichtung Handgriffe auf, die zum Herbeiführen der Bewegung des Innenstücks gedreht werden. Alternativ ist die Betätigungseinrichtung als Spannhebel ausgebildet, dessen Schwenken ein Bewegen des Innenstücks in Richtung auf den Hebel bewirkt. Der Spannhebel kann analog zu dem Handgriff ein Gewinde oder einen Gewindezapfen aufweisen, das bzw. der mit dem Innenstück zusammenwirkt. Über das Gewinde wird eine Voreinstellung vorgenommen. Zum Aufbringen der finalen Klemmkraft wird der Spannhebel geschwenkt. Die Mechanik von Spannhebeln ist als solche bekannt. Die Spannung erfolgt über einen Exzenter des Spannhebels.

Das erfindungsgemäße Trampolin kann in Privathaushalten, aber insbesondere auch in Fitnessstudios zum Einsatz kommen. In Fitnessstudios werden die erfindungsgemäßen Trampoline häufig in Gruppen eingesetzt. Dies bedeutet, dass die Trampoline nach ihrer Benutzung verstaut werden müssen. In diesem Zusammenhang wird vorgeschlagen, dass die Betätigungseinrichtung einen Hebel aufweist, mit dem die Betätigungseinrichtung drehbar ist, wobei der Hebel in der Betätigungseinrichtung längsverschieblich gelagert ist. Der Hebel erleichtert durch seine Verschiebbarkeit die Stapelbarkeit der Trampoline. Beim Stapeln wird man den Hebel in eine solche Stellung bringen, in der er für das benachbarte (aufgesetzte) Trampolin kein Hindernis ist. Der Hebel kann aus Metall hergestellt sein. Ein weiterer Vorteil des Hebels besteht darin, dass das Anzugsmoment relativ groß ist, was zu einer großen Klemmkraft führt.

Die Führung kann auf verschiedenen Weise mit dem Gestell verbunden sein. Beispielsweise kann die Führung mit dem Rahmen oder einem Bein verschraubt oder verklebt sein. Häufig sind die Gestelle aus Metall, insbesondere aus Stahl oder Edelstahl hergestellt. In diesem Zusammenhang wird vorgeschlagen, dass die Führung mit dem Gestell verschweißt ist. Eine derartige Befestigung ist besonders gut in der Lage, die bei der Benutzung des Trampolins auftretenden periodischen Belastungen aufzunehmen.

An dieser Stelle sei darauf hingewiesen, dass der Stange mehrere Funktionen zukommen können. Wie bereits eingangs angedeutet, kann die Stange als Haltestange ausgebildet sein und mindestens eine Griffeinrichtung aufweisen, an der sich der Benutzer während des Springens oder Schwingens festhalten kann. Die Griffeinrichtung umfasst beispielsweise zwei seitlich von der Stange abgehende Griffe. Alternativ oder zusätzlich ist es möglich, dass die Stange (ggf. zusätzlich) eine Aufnahme für ein elektronisches Gerät aufweist. Hierbei kann es sich um ein Tablet-PC oder beispielsweise ein Gerät handeln, das die Körperfunktionen des Benutzers misst und/oder überwacht.

Bei der Verwendung der Stange als Haltestange wirken auf die Haltestange während der Benutzung erhebliche Kräfte. Damit ist die Führung einer besonderen Belastung ausgesetzt, insbesondere vor dem Hintergrund, dass auf die Führung aufgrund der Längserstreckung der Haltestange erhebliche Hebelkräfte wirken. Erfindungsgemäß wird vorgeschlagen, dass der Rahmen eine Aussparung bildet, in der die Führung aufgenommen ist. Bei der Aussparung kann es sich um eine teilweise Aussparung handeln, bei der der Rahmen nicht vollständig geöffnet (im Sinne von durchgetrennt) ist, sondern lediglich eine Vertiefung in dem Rahmen ausgebildet ist. Gegenüber herkömmlichen Lösungen, bei denen die Stange oder ihre Aufnahme lediglich seitlich an den Rahmen angeschweißt ist, bildet die Aussparung eine größere Kontaktfläche, was eine wesentliche Steigerung der Festigkeit zur Folge hat. Die durch die Aussparung zunächst in Kauf genommene Schwächung des Rahmens wird also durch das Anbringen der Führung kompensiert mit dem erheblichen Vorteil einer stabilen Befestigung der Führung und damit einer langlebigen und stabilen Gesamtkonstruktion, die auch den hohen Hebelkräften beim Training auf dem Trampolin standhält.

Als besonders vorteilhaft wird es angesehen, wenn der umlaufende Rahmen durchbrochen ist und die Führung in die sich ergebende Aussparung eingesetzt ist. Bei Metallrahmen ist die Führung zweckmäßig eingeschweißt. Der Rahmen liegt also vorteilhaft beidseitig an der Führung an. Hierdurch kann eine große Kontaktfläche erreicht werden. Dadurch wird die Führung exzellent gehalten. Gleichzeitig bleibt der Rahmen stabil. Der Einsatz der Führung in den Rahmen weist den weiteren Vorteil einer kompakten Bauweise auf. Hierdurch ist das Trampolin gut stapelbar.

Bereits vorstehend wurde erwähnt, dass es vorteilhaft ist, wenn die Führung als Rohrstück ausgebildet ist. Hierbei kann es sich um ein eckige oder ein rundes (zylindrisches) Rohrstück handeln. Die Herstellung eines Rohrstücks ist günstig. Eine runde Form reduziert das Verletzungsrisiko.

Eine vorteilhafte Ausführungsform der Erfindung ist dadurch gekennzeichnet, dass das Rohrstück senkrecht zu der Erstreckungsrichtung der Beine angeordnet ist. Insbesondere wird vorgeschlagen, dass sich das Rohrstück radial nach innen in Bezug auf den umlaufenden Rahmen öffnet. Diese Ausführungsform baut sehr kompakt. Das Innenstück kann radial von innen in das Rohrstück eingesteckt werden. Seine Bewegungsrichtung ist vorzugsweise radial. Ein Rohrstück begünstigt ferner die Stapelbarkeit. Die Erfindung gestattet es, dass das Rohrstück nach oben und unten maximal 2 cm über den Rahmen übersteht, wie es grundsätzlich im Rahmen der Erfindung als vorteilhaft angesehen wird.

Vorzugsweise weist die Führung eine Stirnwand auf. An der Stirnwand stützt sich vorteilhaft die Betätigungseinrichtung ab. Die Stärke der Stirnwand wird man so wählen, dass sie die Klemmkräfte, die die Betätigungseinrichtung auf sie ausübt, aufnehmen kann. Vorzugsweise greift die Betätigungseinrichtung durch die Stirnwand hindurch. Die Betätigungseinrichtung ist zweckmäßig drehbar in der Stirnwand gelagert.

Im Folgenden wird die Erfindung anhand eines bevorzugten Ausführungsbeispiels im Zusammenhang mit der anhängenden **Zeichnung** näher erläutert. Die Zeichnung zeigt in:
- Figur 1:: in schematischer Darstellung eine perspektivische Ansicht eines erfindungsgemäßen Trampolins mit Haltestange;
- Figur 2:: in schematischer Darstellung die Befestigung der Haltestange an dem Trampolinrahmen;
- Figur 3:: in schematischer Darstellung eine Schnittansicht durch die Führung, in der die Haltestange lösbar aufgenommen ist;
- Figur 4:: in schematischer Darstellung die Schnittansicht nach Figur 3, wobei die Haltestange in der Führung fixiert ist;
- Figur 5:: in schematischer Darstellung ein alternatives Ausführungsbeispiel zu den Figuren 3 und 4;
- Figur 6:: in schematischer Darstellung das Zusammenwirken zwischen dem Innenstück und der Führung, wobei das Innenstück in der Führung aufgenommen ist;
- Figur 7:: in schematischer Darstellung die Führung und das Innenstück nach Figur 7, wobei das Innenstück leicht aus der Führung herausgezogen ist; und
- Figur 8:: in schematischer Darstellung eine alternative Ausführungsform der Betätigungseinrichtung.

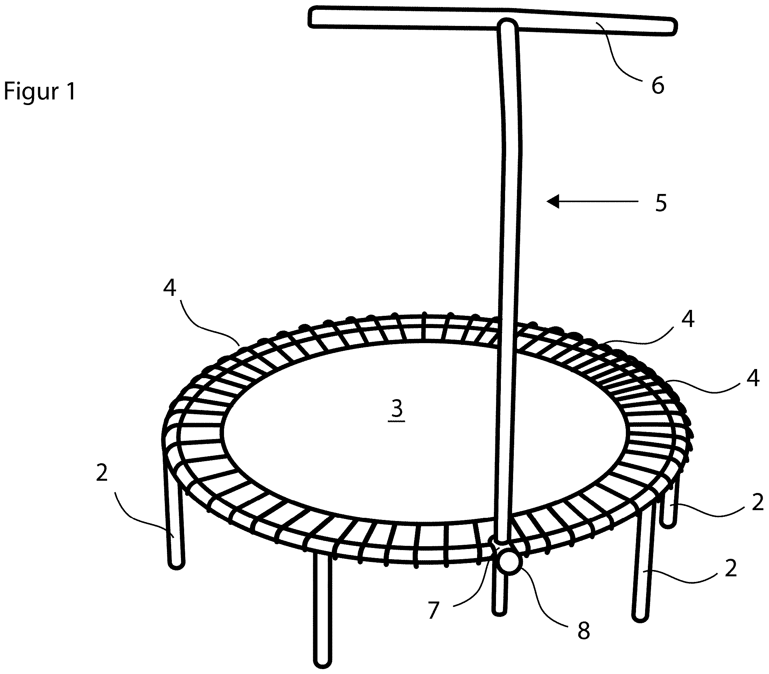

Figur 1 zeigt ein Ausführungsbeispiel eines erfindungsgemäßen Trampolins. Das Trampolin weist einen Rahmen 1 auf, der sich mit einer Mehrzahl von Beinen 2 am Boden abstützt. Der Rahmen hält ein Sprungtuch 3, das über eine Vielzahl von Federelementen 4 an dem Rahmen gehalten ist. Bei den Federelementen 4 kann es sich um Gummiseilabschnitte handeln, die entweder offen oder geschlossen ausgebildet sind. Beide Varianten sind aus dem Stand der Technik bekannt. Die Gummiseilabschnitte können in an dem Sprungtuch befestigte Aufnahmeelemente, zum Beispiel Hakenelemente, eingehängt sein. Alternativ kommen Metallfedern zum Einsatz, welche ebenfalls aus dem Stand der Technik bekannt sind.

An dem Trampolin ist eine Stange 5 befestigt. Die Stange 5 ist bei dem dargestellten Ausführungsbeispiel als Haltestange ausgebildet und weist einen Griff 6 auf. Alternativ oder zusätzlich kann die Stange auch eine Halterung für ein elektronisches Gerät wie zum Beispiel ein Tablet-PC oder dergleichen aufweisen. Die Stange kann auch andere Aufgaben übernehmen. Beispielsweise kann an der Stange ein gummielastisches Band zur Unterstützung bei Übungen auf dem Trampolin befestigt werden. Der Einfachheit halber wird im Folgenden ausschließlich Bezug genommen auf eine Haltestange.

Die Haltestange 5 ist in einer Führung 7 gehalten, die am Rahmen 1 befestigt, beispielsweise geschraubt oder geschweißt ist. Die Führung kann auch an einem der Beine 2 befestigt sein. Die Haltestange 5 ist höhenverstellbar und mittels einer (in Figur 1 lediglich angedeuteten) Betätigungseinrichtung 8 in der Führung 7 fixierbar.

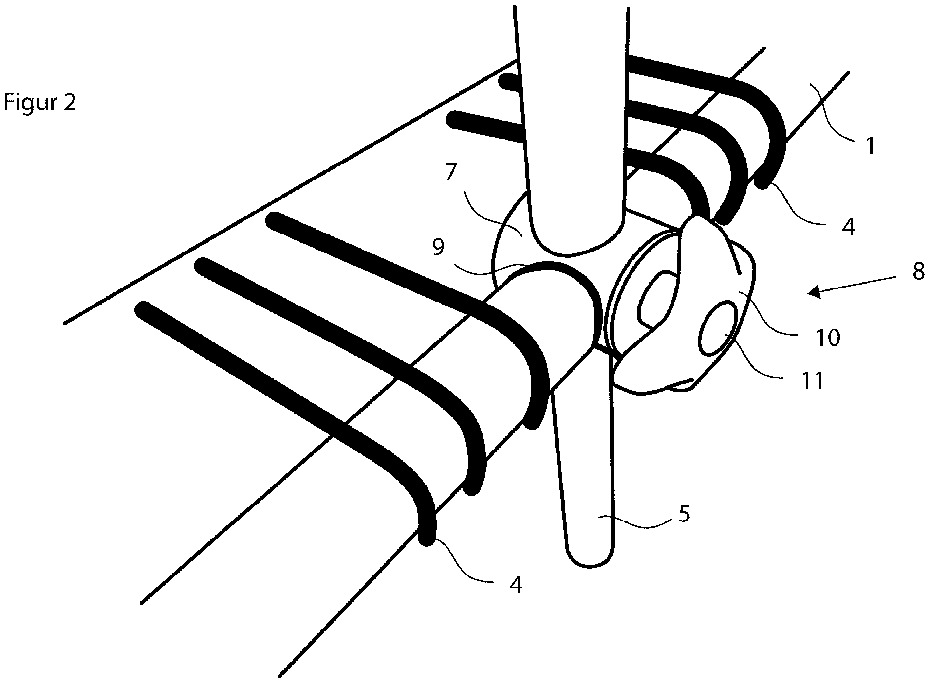

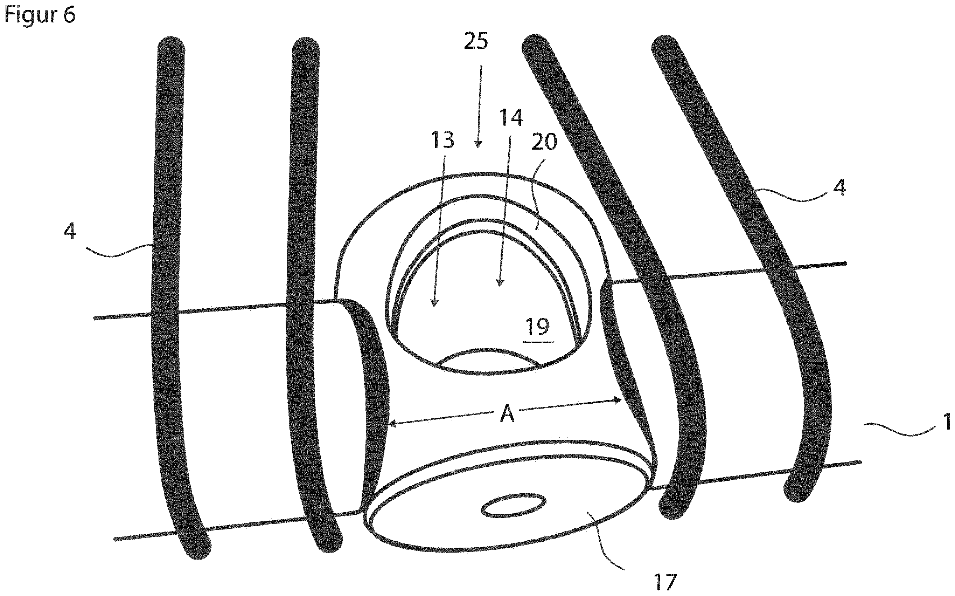

Figur 2 zeigt die Führung 7 aus Figur 1 genauer im Detail. Die Führung 7 ist an dem Rahmen 1 festgeschweißt, wie dies durch die Schweißnaht 9 ersichtlich ist. Hierzu ist der Rahmen 1 dort, wo die Führung 7 eingesetzt wird, aufgetrennt und bildet eine Aussparung A. Dies verleiht der Gesamtkonstruktion eine hohe Stabilität bei gleichzeitig elegantem und schlankem Design. Die Aussparung ist aus Übersichtsgründen in Figur 6 dargestellt.

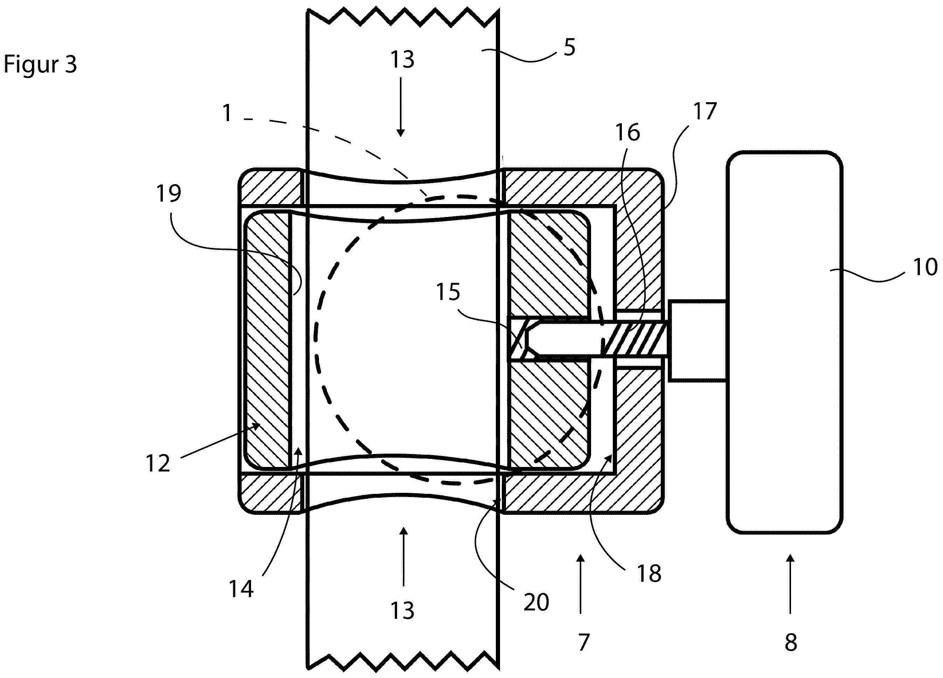

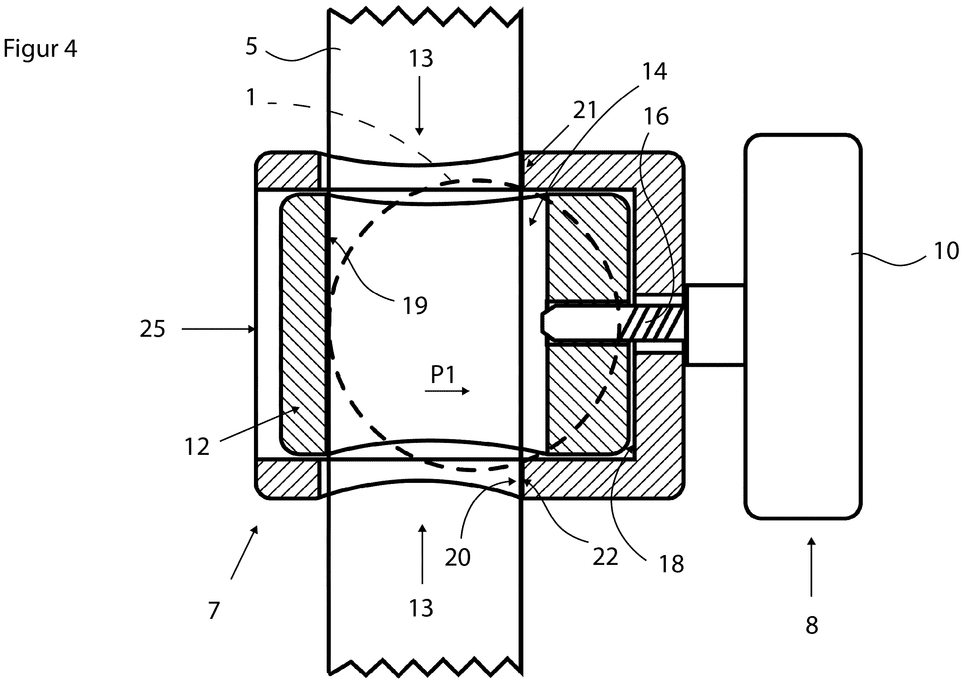

Die Betätigungseinrichtung 8 weist einen Handgriff 10 auf, der aus Kunststoff ausgebildet sein kann. Der Handgriff sitzt auf einer Drehachse 11, die in ein Gewinde aufweist, wie es im Zusammenhang mit den Figuren 3 und 4 noch näher beschrieben wird.

Es wird auf Figur 3 Bezug genommen, die in schematischer Darstellung einen Schnitt durch die Führung 7 zeigt. Die Führung 7 ist mit dem Rahmen 1 verschweißt. Der Rahmen 1 umfasst die Führung vorzugsweise beidseitig. Der Rahmen ist in Figur 3 mit einer Strichlinie angedeutet.

In der Führung 7 ist die Haltestange 5 in Richtung ihrer Längsachse verschiebbar aufgenommen. Die Haltestange 5 ist in der Führung 7 fixierbar. Hierzu ist in der Führung 7 ein Innenstück 12 bewegbar aufgenommen. Das Innenstück 12 ist vorzugsweise in der Führung 7 verschiebbar geführt. Vorzugsweise ist das Innenstück 12 im Wesentlichen zylindrisch.

Die Führung 7 weist zwei Öffnungen 13 auf, die vorzugsweise fluchten. Das Innenstück 12 weist ebenfalls eine Öffnung 14 auf. Die Stange 5 ist durch die Öffnungen 13, 14 hindurchsteckbar. Die Öffnungen 13, 14 fluchten hierzu zweckmäßig und sind vorzugsweise größer ausgebildet als der Querschnitt der Stange 5, damit die Stange durch die Öffnungen hindurchgesteckt werden kann.

An dieser Stelle sei darauf hingewiesen, dass in Figur 3 lediglich ein Teil der Haltestange dargestellt ist. Die Haltestange kann einen runden Querschnitt aufweisen. Alternativ weist sie einen eckigen, insbesondere quadratischen Querschnitt auf. Die Öffnungen sind an die Querschnittsform der Haltestange angepasst.

Das Innenstück 12 ist mit der Betätigungseinrichtung 8 gekoppelt. Hierzu weist das Innenstück 7 ein Innengewinde 15 auf, das mit einem Gewindezapfen 16 der Betätigungseinrichtung 8 in Eingriff steht. Der Gewindezapfen 16 wird mittels des Handgriffs 10 gedreht. Aufgrund des Gewindeeingriffs zwischen dem Innenstück 12 und der Betätigungseinrichtung 8 führt eine Drehung des Handgriffs 10 zu einer Bewegung des Innenstücks 12 in der Führung 7. Hierbei stützt sich die Betätigungseinrichtung 8 an der Führung 7 ab. Vorzugsweise weist die Führung 7 eine Stirnwand 17 auf, an der sich die Betätigungseinrichtung 8 abstützt.

In Figur 3 ist das Innenstück 12 in einer Öffnungsstellung gezeigt. In dieser ist die Haltestange 15 in der Führung bewegbar. Das heißt, die Öffnungen 13 und 14 sind so ausgerichtet, dass sie der Haltestange 5 genug Spiel lassen, um bewegt zu werden. Vorzugsweise ist Querschnitt der Öffnung 14 des Innenstücks 12 größer als der Querschnitt der Öffnungen 13 der Führung.

Figur 4 zeigt die Haltestange 5 in einem fixierten Zustand. Die Haltestange 5 wird dadurch eingeklemmt, dass der Handgriff 10 der Betätigungseinrichtung 8 so gedreht wird, dass das Gewinde 16 das Innenstück 12 in Richtung auf den Handgriff 10 heranzieht, wie dies durch den Pfeil P1 angedeutet ist. Es sei angemerkt, dass die Konstruktion grundsätzlich auch so beschaffen sein kann, dass durch Betätigen der Betätigungseinrichtung 8 das Innenstück 12 in die andere Richtung, also entgegen des Pfeils Pl, bewegt wird und damit die Haltestange 5 fixiert. Dann muss sich die Betätigungseinrichtung 8 auf der Innenseite 18 der Führung abstützen, um die Kraft auf das Innenstück 12 aufzubringen. Hierzu kann beispielsweise ein Sperrring vorgesehen sein.

Beim Bewegen des Innenstücks 12 in Richtung des Pfeils P1 wandert die Öffnung 14 ebenfalls in Richtung des Pfeils Pl, bis die Innenseite 19 des Innenstücks 12 zur Anlage an die Haltestange 5 gelangt. Die Haltestange 5 wird gegen die Innenseite 20 der Öffnung 13 der Führung 7 gepresst und dadurch fixiert. Als vorteilhaft bei diesem Ausführungsbeispiel wird es angesehen, dass die Haltestange 5 mit einer großen Haltefläche, die von der Innenseite 19 zur Verfügung gestellt wird, verklemmt wird. Dies schafft eine stabile und dauerhafte Fixierung der Haltestange in der Führung 7. Als vorteilhaft wird es ferner angesehen, dass die Führung zwei Anlageflächen 21, 22 zur Verfügung stellt. Vorzugsweise ist die eine Anlagefläche 21 oben und eine Anlagefläche 22 unten angeordnet. Insbesondere kann die eine Anlagefläche 22 oberhalb des Rahmens und die andere Anlagefläche 22 unterhalb des Rahmens angeordnet sein. Eine derartige Ausführung der Erfindung schafft eine vorteilhafte Ausrichtung der Haltestange 5 gegenüber dem Rahmen 1.

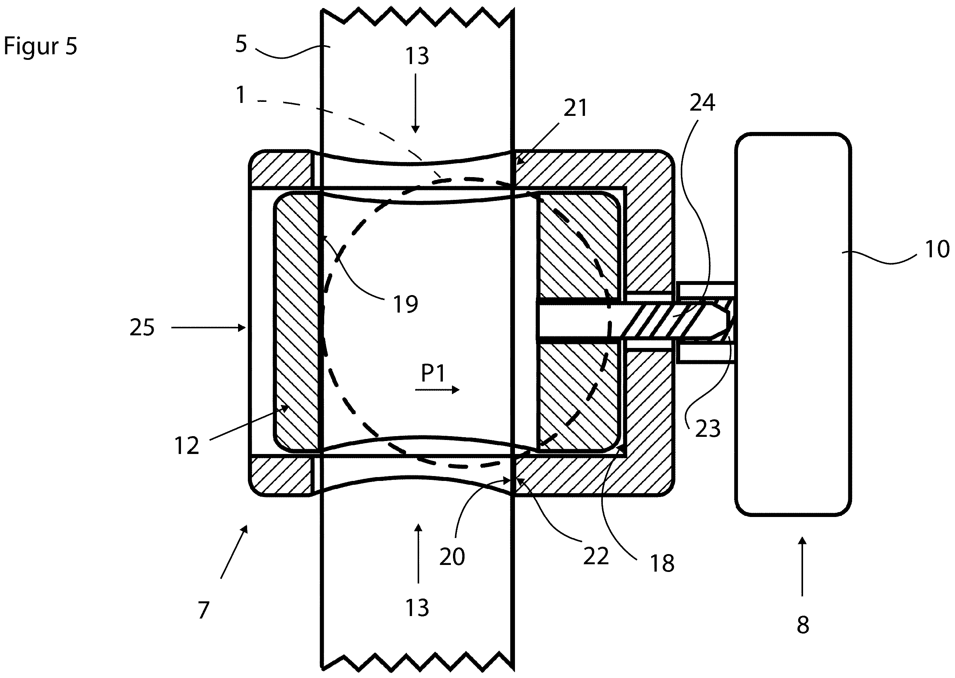

Figur 5 zeigt ein alternatives Ausführungsbeispiel zu den Figuren 3 und 4. Aus Übersichtsgründen werden dieselben oder ähnliche Bauteile mit denselben Bezugsziffern gekennzeichnet, auch wenn sie baulich geringfügig voneinander abweichen sollten. Das Ausführungsbeispiel nach Figur 5 zeigt die Haltestange in einem fixierten Zustand. Das Ausführungsbeispiel unterscheidet sich von den Figuren 3 und 4 dadurch, dass die Betätigungseinrichtung 8 keinen Gewindezapfen aufweist, sondern eine Mutter 23. Das Innenstück 12 weist einen Gewindezapfen 24 auf. Das Innenstück 7 und die Betätigungseinrichtung 8 stehen in Gewindeeingriff. Durch Drehen des Handgriffs wird - wie bei dem Ausführungsbeispiel gemäß der Figuren 3 und 4 - das Innenstück 12 in Richtung des Pfeils P1 gezogen.

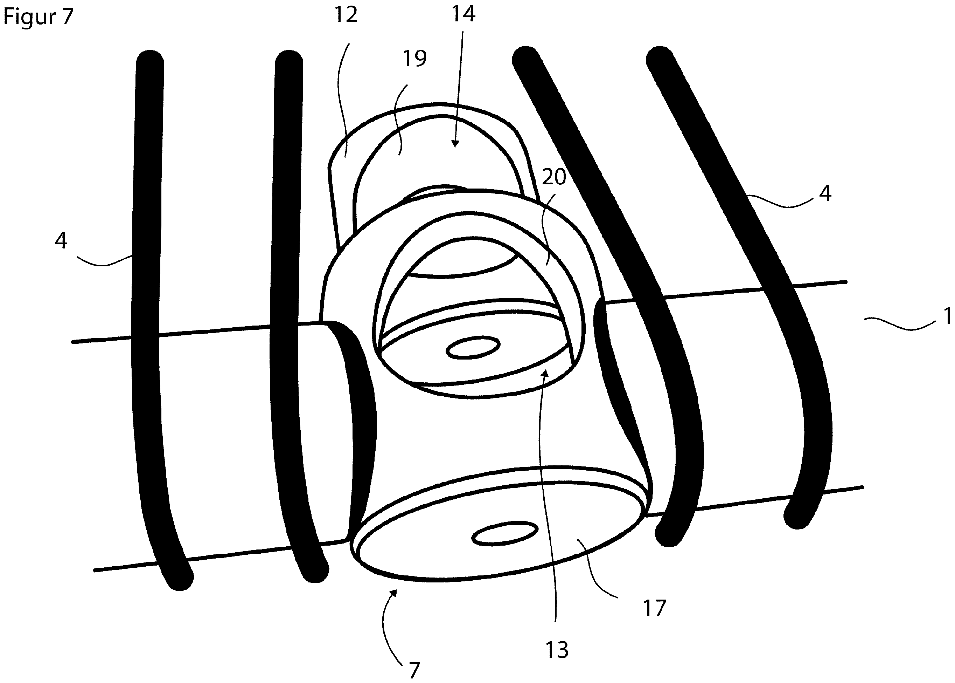

Die Figuren 6 und 7 zeigen das Zusammenwirken des Innenstücks 12 und der Führung 7. Aus Übersichtsgründen sind die Betätigungseinrichtung und die Haltestange in der Darstellung weggelassen. In Figur 6 befinden sich das Innenstück 12 und die Führung 7 in einer Stellung, in der die Öffnungen 13 (der Führung) und 14 (des Innenstücks) fluchten. In dieser Stellung kann die Haltestange eingesetzt werden. Die sich aus der Überlagerung der Öffnungen 13, 14 ergebende Schnittöffnung muss mindestens so groß sein wie der Querschnitt der Haltestange, damit die Haltestange durch die Führung 7 und das Innenstück 12 hindurchsteckbar ist.

Figur 7 zeigt eine Stellung des Innenstücks 12 in einer leicht aus der Führung 7 herausgezogenen Stellung. Hier wird deutlich, dass es vorteilhaft ist, wenn die Führung eine radial innen liegende Öffnung 25 aufweist. Vorzugsweise liegt die Öffnung 25 der Stirnwand 17 gegenüber. Durch diese Öffnung 25 kann das Innenstück 12 für die Montage in die Führung 7 eingesteckt und zur Demontage herausgezogen werden. Die Montage ist also sehr einfach. Gleichzeitig schafft die Kombination aus Innenstück 12 und Führung 7 über die Innenseiten 19 und 20 eine stabile Verklemmung der Haltestange, wie vorstehend ausgeführt.

Die Führung 7 ist vorteilhafterweise als Rohrstück ausgebildet. Ein derartiges Rohrstück ist einfach herstellbar und stabil. Insbesondere kann das Rohrstück einseitig eine Stirnwand 17 aufweisen, durch die die Betätigungseinrichtung oder ein von dem Innenstück 12 abgehender Gewindezapfen (siehe Figur 5) hindurchgeht.

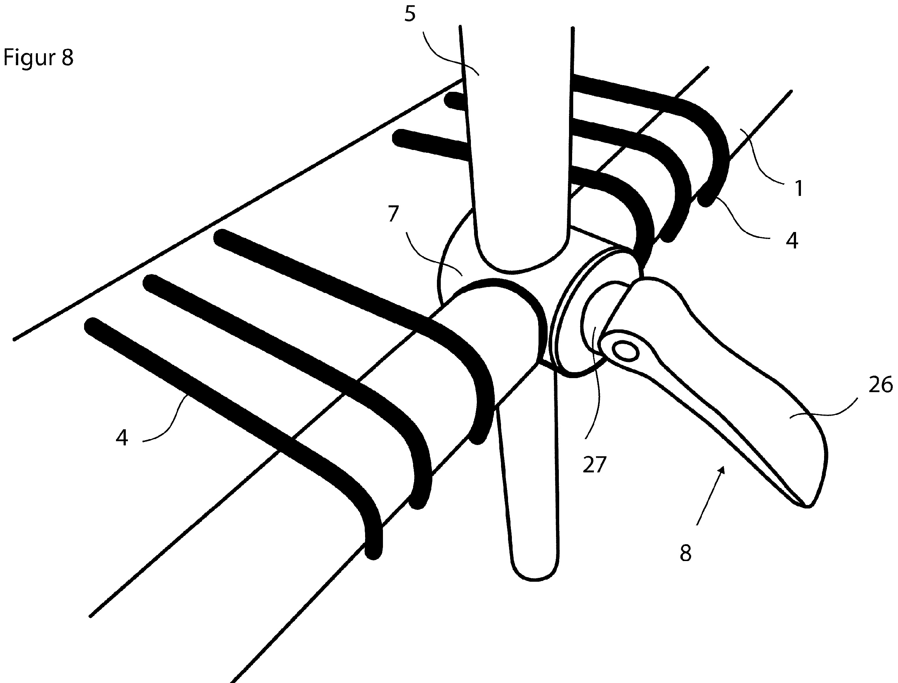

Figur 8 zeigt eine alternative Ausführungsform der Betätigungseinrichtung 8. Die Betätigungseinrichtung weist einen Spannhebel 26 auf. Auch hier stehen der Spannhebel und das Innenstück vorzugsweise in Gewindeeingriff miteinander (analog den Figuren 3 bis 5). Über das Gewinde ist eine Grobeinstellung möglich. Die finale Klemmkraft wird über den Spannhebel aufgebracht, der sich vorteilhafterweise auf einem Zwischenstück 27 oder unmittelbar an der Führung 7 abstützt. Das Zwischenstück 27 liegt an der Führung 7 an.

Die Rahmenform ist in den Figuren ausschließlich rund dargestellt. Sie kann auch polygonal, insbesondere sechs- oder achteckig sein.

Im Rahmen der Beschreibung werden sämtliche unbestimmte Ortsangaben wie zum Beispiel "über", "unter" oder "seitlich" auf ein stehendes Trampolin bezogen. Es werden ferner Ortsangaben oder Richtungsangaben wie radial innen oder radial außen verwendet. Diese sind bezogen auf den Rahmen, der entweder (in seiner Draufsicht) rund oder eckig ausgebildet sein kann. Sofern er rund ausgebildet ist, bildet der runde Rahmen einen Krümmungsmittelpunkt. Die Angaben sind auf diesen Punkt bezogen. Eine Führung, die sich radial erstreckt, liegt also auf einer Linie, die sich radial von dem Krümmungsmittelpunkt nach außen erstreckt. Bei eckigen Rahmenformen sind regelmäßig zwischen den Ecken gerade Rahmenabschnitte vorgesehen. Die Führung wird man in der Mitte der Rahmenabschnitte anordnen. Die von der Mitte eines jeden Rahmenabschnitts abgehenden Senkrechten schneiden sich im Zentrum des Rahmens, so dass zum Beispiel ein Rohrstück, das sich radial zu dem eckigen Rahmen erstreckt, auf einer Linie liegt, die von dem Zentrum radial nach außen geht. In der Mitte des Rahmenabschnitts schneidet diese Linie den Rahmen senkrecht.

### Bezugszeichenliste

- 1: Rahmen
- 2: Beine
- 3: Sprungtuch
- 4: Federelemente
- 5: Haltestange
- 6: Griff
- 7: Führung
- 8: Betätigungseinrichtung
- 9: Schweißnaht
- 10: Handgriff
- 11: Drehachse
- 12: Innenstück
- 13: Öffnung (der Führung)
- 14: Öffnung (des Innenstücks)
- 15: Gewinde
- 16: Gewindezapfen
- 17: Stirnfläche
- 18: Innenseite
- 19: Innenseite
- 20: Innenseite (der Öffnung)
- 21: Anlagefläche
- 22: Anlagefläche
- 23: Mutter
- 24: Gewindezapfen
- 25: Öffnung
- 26: Spannhebel
- 27: Zwischenring
- P1: Pfeil
- A: Aussparung

## Patentansprüche

1. Trampolin, mit
- einem Gestell, das einen umlaufenden Rahmen (1) und eine Mehrzahl von Beinen (2) aufweist, wobei der Rahmen aus einem Rohr besteht, das zur Herstellung des Rahmens gebogen ist,
- einem Sprungtuch (3), das elastisch an dem Rahmen (1) aufgehängt ist,
- mindestens einer Führung (7), die an dem Gestell befestigt ist,
- einer Stange (5), die höhenverstellbar in der Führung (7) aufgenommen ist, und
- einem Innenstück (12), das in der Führung (7) beweglich aufgenommen ist, **dadurch gekennzeichnet, dass** durch eine Relativbewegung zwischen dem Innenstück (12) und der Führung (7) die Stange (5) fixiert wird, und
- dass der Rahmen (1) eine Aussparung (A) bildet, in der die Führung (7) aufgenommen ist.

2. Trampolin nach Anspruch 1, **dadurch gekennzeichnet, dass** die Führung (7) mindestens eine erste Öffnung (13) aufweist, durch die hindurch die Stange (5) gesteckt ist.

3. Trampolin nach Anspruch 1 oder 2, **dadurch gekennzeichnet, dass** die Führung (7) eine umlaufende Umfangswandung aufweist, und dass die erste Öffnung (13) in der Umfangswandung ausgebildet ist.

4. Trampolin nach einem der Ansprüche 1 bis 3, **dadurch gekennzeichnet, dass** das Innenstück (12) eine Öffnung (14) aufweist, durch die die Stange (5) hindurchgeht.

5. Trampolin nach einem der Ansprüche 1 bis 4, **dadurch gekennzeichnet, dass** die Führung eine Öffnung (25) aufweist, durch die hindurch das Innenstück (12) in die Führung (7) einsteckbar ist.

6. Trampolin nach Anspruch 5, **dadurch gekennzeichnet, dass** die Öffnung (25) radial nach innen gerichtet ist.

7. Trampolin nach einem der Ansprüche 1 bis 6, **dadurch gekennzeichnet, dass** das Innenstück (12) mit einer Betätigungseinrichtung (8) gekoppelt ist, die sich an dem Rahmen (1) oder vorzugsweise an der Führung (7) oder an einem der Führung anliegenden Zwischenstück (26) abstützt.

8. Trampolin nach Anspruch 7, **dadurch gekennzeichnet, dass** die Betätigungseinrichtung (8) und das Innenstück (12) in Gewindeeingriff stehen.

9. Trampolin nach Anspruch 7 oder 8, **dadurch gekennzeichnet, dass** die Betätigungseinrichtung (8) einen Gewindezapfen (16) aufweist, der in ein Innengewinde (15) des Innenstücks (12) eingreift.

10. Trampolin nach Anspruch 7 oder 8, **dadurch gekennzeichnet, dass** das Innenstück (12) einen Gewindezapfen (24) aufweist, der in ein Innengewinde (23) der Betätigungseinrichtung (8) eingreift.

11. Trampolin nach einem der Ansprüche 6 bis 9, **dadurch gekennzeichnet, dass** die Betätigungseinrichtung (8) als Spannhebel (25) ausgebildet ist, dessen Schwenken ein Bewegen des Innenstücks (12) in Richtung auf den Spannhebel bewirkt.

12. Trampolin nach einem der Ansprüche 1 bis 11, **dadurch gekennzeichnet, dass** die Führung (7) mit dem Rahmen (1) verschweißt ist.

13. Trampolin nach einem der Ansprüche 1 bis 12, **dadurch gekennzeichnet, dass** die Führung (7) als Rohrstück ausgebildet ist.

14. Trampolin nach Anspruch 13, **dadurch gekennzeichnet, dass** das Rohrstück (7) senkrecht zu der axialen Erstreckungsrichtung der Beine (2) angeordnet ist und sich vorzugsweise radial nach innen öffnet.

15. Trampolin nach einem der Ansprüche 1 bis 14, **dadurch gekennzeichnet, dass** die Führung (7) eine Stirnwand (17) aufweist.

## Claims

1. Trampoline with
- a base which has a peripheral frame (1) and a plurality of legs (2), the frame being composed of a tube, which is bent in order to produce the frame,
- a bounce mat (3) which is suspended elastically on the frame (1),
- at least one guide (7) which is secured to the base,
- a bar (5) which is received in a height-adjustable manner in the guide (7), and
- an inner piece (12) which is received movably in the guide (7),
**characterized in that**
- the bar (5) is fixed by a relative movement between the inner piece (12) and the guide (7), and
- the frame (1) forms a recess (A) in which the guide (7) is received.

2. Trampoline according to Claim 1, **characterized in that** the guide (7) has at least a first opening (13) through which the bar (5) is inserted.

3. Trampoline according to Claim 1 or 2, **characterized in that** the guide (7) has a peripheral circumferential wall, and **in that** the first opening (13) is formed in the circumferential wall.

4. Trampoline according to one of Claims 1 to 3, **characterized in that** the inner piece (12) has an opening (14) through which the bar (5) extends.

5. Trampoline according to one of Claims 1 to 4, **characterized in that** the guide has an opening (25) through which the inner piece (12) can be inserted into the guide (7).

6. Trampoline according to Claim 5, **characterized in that** the opening (25) is directed radially inward.

7. Trampoline according to one of Claims 1 to 6, **characterized in that** the inner piece (12) is coupled to an actuating mechanism (8) which is supported on the frame (1) or preferably on the guide (7) or on an intermediate piece (26) bearing on the guide.

8. Trampoline according to Claim 7, **characterized in that** the actuating mechanism (8) and the inner piece (12) are in threaded engagement.

9. Trampoline according to Claim 7 or 8, **characterized in that** the actuating mechanism (8) has a threaded pin (16) which engages in an inner thread (15) of the inner piece (12).

10. Trampoline according to Claim 7 or 8, **characterized in that** the inner piece (12) has a threaded pin (24) which engages in an inner thread (23) of the actuating mechanism (8).

11. Trampoline according to one of Claims 6 to 9, **characterized in that** the actuating mechanism (8) is designed as a tensioning lever (25) whose pivoting causes a movement of the inner piece (12) in the direction of the tensioning lever.

12. Trampoline according to one of Claims 1 to 11, **characterized in that** the guide (7) is welded to the frame (1).

13. Trampoline according to one of Claims 1 to 12, **characterized in that** the guide (7) is designed as a tube section.

14. Trampoline according to Claim 13, **characterized in that** the tube section (7) is arranged perpendicularly with respect to the axial direction of extent of the legs (2) and preferably opens radially inward.

15. Trampoline according to one of Claims 1 to 14, **characterized in that** the guide (7) has a front wall (17) .

## Revendications

1. Trampoline, comportant
- un châssis qui comprend un cadre périphérique (1) et une pluralité de pieds (2), le cadre étant constitué d'un tube qui est courbé pour produire le cadre,
- une toile de saut (3) qui est suspendue élastiquement au cadre (1),
- au moins un guide (7) qui est fixé au châssis,
- une tige (5) qui est reçue de manière réglable en hauteur dans le guide (7), et
- une pièce intérieure (12) qui est reçue de manière mobile dans le guide (7), **caractérisé en ce que** la tige (5) est fixée par un mouvement relatif entre la pièce intérieure (12) et le guide (7), et
- **en ce que** le cadre (1) forme un évidement (A) dans lequel le guide (7) est reçu.

2. Trampoline selon la revendication 1, **caractérisé en ce que** le guide (7) comprend au moins une première ouverture (13) à travers laquelle la tige (5) est insérée.

3. Trampoline selon la revendication 1 ou 2, **caractérisé en ce que** le guide (7) comprend une paroi circonférentielle périphérique, et **en ce que** la première ouverture (13) est réalisée dans la paroi circonférentielle.

4. Trampoline selon l'une des revendications 1 à 3, **caractérisé en ce que** la pièce intérieure (12) comprend une ouverture (14) à travers laquelle la tige (5) s'étend.

5. Trampoline selon l'une des revendications 1 à 4, **caractérisé en ce que** le guide comprend une ouverture (25) à travers laquelle la pièce intérieure (12) peut être insérée dans le guide (7).

6. Trampoline selon la revendication 5, **caractérisé en ce que** l'ouverture (25) est orientée radialement vers l'intérieur.

7. Trampoline selon l'une des revendications 1 à 6, **caractérisé en ce que** la pièce intérieure (12) est accouplée à un dispositif d'actionnement (8) qui est supporté sur le cadre (1) ou de préférence sur le guide (7) ou sur une pièce intermédiaire (26) s'appuyant sur le guide.

8. Trampoline selon la revendication 7, **caractérisé en ce que** le dispositif d'actionnement (8) et la pièce intérieure (12) sont en prise par filetage.

9. Trampoline selon la revendication 7 ou 8, **caractérisé en ce que** le dispositif d'actionnement (8) comprend un goujon fileté (16) qui vient en prise dans un filetage intérieur (15) de la pièce intérieure (12).

10. Trampoline selon la revendication 7 ou 8, **caractérisé en ce que** la pièce intérieure (12) comprend un goujon fileté (16) qui vient en prise dans un filetage intérieur (23) du dispositif d'actionnement (8).

11. Trampoline selon l'une des revendications 6 à 9, **caractérisé en ce que** le dispositif d'actionnement (8) est réalisé sous forme de levier de serrage (25) dont le pivotement provoque un mouvement de la pièce intérieure (12) en direction de levier de serrage.

12. Trampoline selon l'une des revendications 1 à 11, **caractérisé en ce que** le guide (7) est soudé sur le cadre (1).

13. Trampoline selon l'une des revendications 1 à 12, **caractérisé en ce que** le guide (7) est réalisé sous forme de pièce tubulaire.

14. Trampoline selon la revendication 13, **caractérisé en ce que** la pièce tubulaire (7) est disposée perpendiculairement à la direction d'étendue axiale des pieds (2) et s'ouvre de préférence radialement vers l'intérieur.

15. Trampoline selon l'une des revendications 1 à 14, **caractérisé en ce que** le guide (7) comprend une paroi frontale (17).
